# EUROPEAN PATENT SPECIFICATION

(11) **EP 3 361 111 B1**
(45) Date of publication and mention of the grant of the patent: **18.12.2019**
(21) Application number: 18155389.2
(22) Date of filing: 06.02.2018
(51) Int. Cl.: F16C 17/10, F16H 25/24

(54) **LINEAR STEPPER MOTOR WITH ROTOR SPINDLE FOR A LINEARLY GUIDED ACTUATOR**
LINEARSCHRITTMOTOR MIT ROTORSPINDEL FÜR EINEN LINEAR GEFÜHRTEN AKTUATOR
MOTEUR PAS-À-PAS LINÉAIRE AVEC TIGE ROTOR DESTINÉ À UN ACTIONNEUR À GUIDAGE LINÉAIRE

(30) Priority: 09.02.2017 DE 202017100708 U
(43) Date of publication of application: 15.08.2018
(73) Proprietor: Johnson Electric International AG, 3280 Murten (CH)
(72) Inventor: Währisch, Sten, Shatin, N.T. (HK); Howack, Gerd, Shatin, N.T. (HK); Müller, Thomas, Shatin, N.T. (HK)
(74) Representative: Hocking, Adrian Niall

(56) References cited:
- DE-A1- 10 332 389
- DE-A1-102010 005 145
- DE-U- 1 891 224

## Description

### FIELD

The present invention relates to a linear stepper motor whose rotor shaft provided with a male thread drives a linearly guided actuator for valves for example. The rotor shaft has plain bearing journals at its axial ends enclosed radially and axially in plain bearings seated in the motor bearing shields and, with its male thread, axially driving a rotation-locked spindle nut linked with a fork-shaped actuator rod.

### BACKGROUND

A generic linear stepper motor is known from Germany patent application NO. DE 103 32 389 A1 according to the preambles of claims 1 and 2. Furthermore, a threaded mechanism made of plastic materials and metal and having a trapezoidal thread is known from Germany patent application NO. DE 10 2010 005 145 A1, e.g., for fittings, specifically valves, where for purposes of reduced material wear either the threaded nut is made of metal and the spindle is made of plastic material or vice versa.

A screw, threaded spindle or equivalent with its core made of steel or similar material and its thread made of plastics for general use in machines or other devices is also known from Germany patent application NO. DE 1 891 224 U1. To retain the thread shell, the core has recesses or similar distributed along its circumference.

### SUMMARY

The invention is based on the task to provide a hard-wearing, low-tolerance and cost-efficient rotor shaft having a motive thread for linear motors and having plain bearing journals on opposite ends for support in a linear motor. The rotor shaft with its motive thread is to be designed for linear propulsion of an actuating rod according to a spindle-nut principle such that the plain bearing journal design can be separated from the design of the rotor shaft, permitting compliance with different technical and structural requirements independently of each other. The rotor shaft should be supported with as little play and as smooth-running as possible in the bearing shells of the linear motor. It should be maintenance-free and manage without any lubricant in the nut-spindle drive as well as be able at any level of miniaturization to transmit high actuating forces without jamming or bending and adapt without problems to tailoring for customer-specific actuating tasks.

The task is solved according to the invention by a rotor shaft including a flexurally and torsionally rigid plastic threaded spindle with a plastic core from which protrude coaxial metallic plain bearing journals of high surface quality at opposite ends. The plain bearing journals are guided both radially and axially in plain bearings of the bearing shields. The rotor shaft with its male motive thread, for example a trapezoidal thread, is made of a rigid, hard-wearing plastic material in an injection moulding process or is made of two different plastic materials of different strength and/or lubrication characteristics by selecting specific customized gear modules for the threaded spindle. The plain bearing journals themselves can also be part of a continuous metallic journal axle or include two separate metallic journals positioned only at the ends and insert-moulded when injection moulding the rotor shaft. Additionally, in a further example of the invention, the rotor shaft can bear a moulded-on neck flange on the drive side for a rotation-locked connection with the rotor magnet. Also, according to another example of the invention, insert-moulding of the rotor magnet directly onto the rotor shaft can be provided, which makes it possible to achieve less eccentricity and thus a smaller air gap towards the stator, resulting in greater overall efficiency of the motor. At their ends, the plain bearing journals are designed such that, in addition to support in a radial plain bearing, low-friction axial support can be implemented by means of balls holding the pointed tips.

### BRIEF DESCRIPTION OF THE DRAWINGS

Fig. 1 shows an example with two metallic journals as plain bearing journals.
Fig. 2 shows an example with a continuous journal axle for the plain bearing journals.

### DETAILED DESCRIPTION

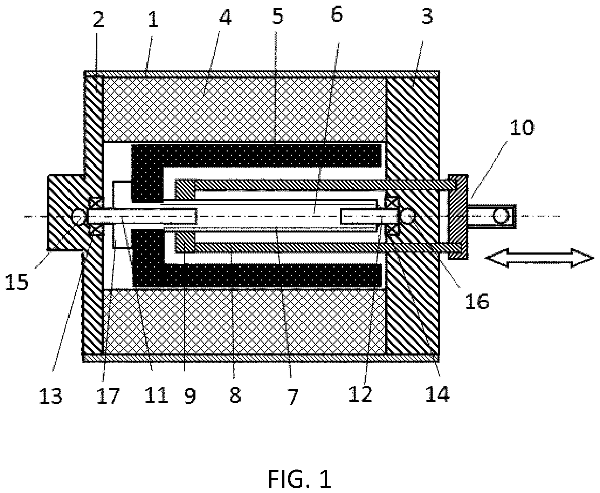

In one example, the greatly schematized representation according to Fig. 1 depicts a linear stepper motor in cross section. Substantially, it includes a motor housing 1 with two bearing shields 2, 3 which close the housing 1 at its opposite ends, a stator 4, a rotor including a rotor magnet 5 and a plastic rotor shaft 6 having a motive thread 7 formed on it, and an actuating rod 8 of a fork-shaped design which is linearly operable by the rotor shaft 6 and which has a spindle nut 9 at its fork base to engage with the motive thread 7 of the rotor shaft 6. The spindle nut 9 can be formed directly at the actuating rod 8 or it is embedded in the fork base in a rotation-locked manner. The actuating rod 8 itself is guided by the drive bearing shield 3 in a rotation-locked manner. Outside the drive bearing shield 3, a customer-specific function head 10, which is, e.g., plugged on the two legs of the fork-shaped actuating rod 8, closes the actuating rod 8 axially. The rotor shaft 6 is supported by the two bearing shields 2, 3. The actuating rod 8 is guided on the rotor shaft 6, on the one hand, and by the drive bearing shield 3, on the other hand. Specifically, according to Fig. 1, the plastic rotor shaft 6 has coaxial metallic journals as plain bearing journals 11, 12 which are of high surface quality and are guided with wear resistance, low maintenance and minimum play in the bearing shields 2, 3 both radially by roller bearings 13, 14 and axially by means of a ball bearing 15, 16. On the non-drive side, the rotor shaft 6 is provided with a neck flange 17 which connects the rotor shaft 6 to the rotor magnet 5 in an especially rotation-locked manner. According to the invention, a rotation-locked connection between the plain bearing journals 11, 12 and the rotor shaft 6 is not a prerequisite because the rotor 6 can rotate relative to the plain bearing journals 11, 12 in another example.

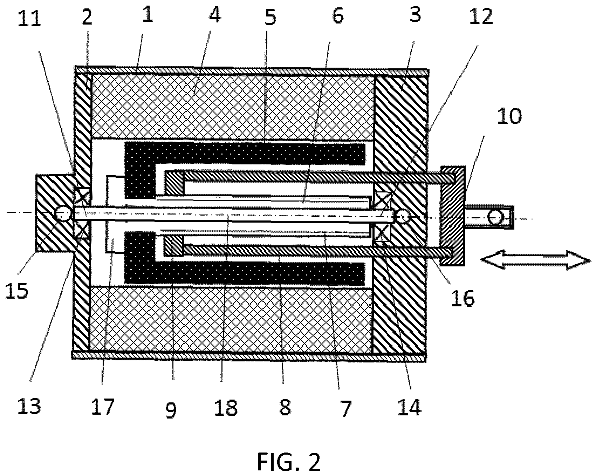

In an alternative example, the linear stepper motor according to Fig. 2 has a design similar to the design of FIG. 1. However, the rotor shaft 6 differs from Fig. 1 by the fact that the two plain bearing journals 11, 12 are linked in form of a one-piece continuous journal axle 18 either of metal or consisting partly of separate plastic materials, running coaxially through the rotor shaft 6.

The invention is particularly suited for valve actuators.

## Claims

1. A linear stepper motor comprising a rotor, two plain bearings (13, 15; 14, 16), two motor bearing shields (2, 3), a spindle nut (9), and a fork-shaped actuating rod (8);
wherein the rotor comprises a rotor shaft (6) that comprises a motive thread (7) and is configured to drive a linearly guided actuator, the rotor shaft (6) comprises plain bearing journals (11, 12) at ends thereof, which each comprise an end radially and axially enclosed in the plain bearings (13, 15; 14, 16) seated in the motor bearing shields (2, 3), and, by the motive thread (7), axially drives the spindle nut (9) connected with the fork-shaped actuating rod (8) in a rotation-proof manner;
**characterised in that**
the rotor shaft (6) comprises a flexurally and torsionally rigid plastic threaded spindle with a plastic core with coaxially arranged metallic shaft ends so as to act as metallic journals on opposite ends for concurrent plain bearing support and axial support.

2. A linear stepper motor comprising a rotor, two plain bearings (13, 15; 14, 16), two motor bearing shields (2, 3), a spindle nut (9), and a fork-shaped actuating rod (8); wherein the rotor comprises a rotor shaft (6) that comprises a motive thread (7) and is configured to drive a linearly guided actuator, the rotor shaft (6) comprises plain bearing journals (11, 12) at ends thereof, which each comprise an end radially and axially enclosed in the plain bearings (13, 15; 14, 16) seated in the motor bearing shields (2, 3), and, by the motive thread (7), axially drives the spindle nut (9) connected with the fork-shaped actuating rod (8) in a rotation-proof manner; wherein the rotor shaft (6) comprises a flexurally and torsionally rigid plastic threaded spindle with coaxially arranged metallic shaft ends so as to act as metallic journals on opposite ends for concurrent plain bearing support and axial support; **characterised in that**
a continuous metallic journal axle (18) is guided through the plastic threaded spindle, and opposite end portions of the journal axle (18) form the two plain bearing journals (11, 12).

3. The linear stepper motor according to claim 1, **characterised in that** two metallic journals arranged coaxially at opposite ends of the rotor shaft (6) form the two plain bearing journals (11, 12) and are fastened to the flexurally and torsionally rigid plastic threaded spindle.

4. The linear stepper motor according to claim 2, **characterised in that** the plain bearing journals (11, 12) or the journal axle (18) is connected to the rotor shaft (6) in a rotation-locked manner.

5. The linear stepper motor according to claim 2, **characterised in that** the plain bearing journals (11, 12) or the journal axle (18) is rotatable with respect to the rotor shaft (6).

6. The linear stepper motor according to any of the preceding claims, **characterised in that** a neck flange (17) is moulded on a non-drive side of the rotor shaft (6) for a rotation-locked connection with a rotor magnet (5) of the rotor.

7. The linear stepper motor according to claim 6, **characterised in that** by injection moulding of the rotor shaft (6), the rotor magnet (5) is insert-moulded.

8. The linear stepper motor according to any of the preceding claims, **characterised in that** the motive thread (7) is a trapezoidal thread.

## Patentansprüche

1. Linearschrittmotor, umfassend einen Rotor, zwei Gleitlager (13, 15; 14, 16), zwei Motorlagerschilde (2, 3), eine Spindelmutter (9) und eine gabelförmige Betätigungsstange (8);
wobei der Rotor eine Rotorwelle (6) umfasst, die ein Antriebsgewinde (7) umfasst und zum Antrieb eines linear geführten Aktuators ausgebildet ist, wobei die Rotorwelle (6) an ihren Enden Gleitlagerzapfen (11, 12) umfasst, die jeweils ein Ende, das radial und axial in den in den Motorlagerschilden (2, 3) angeordneten Gleitlagern (13, 15; 14, 16) eingeschlossen ist und das durch das Antriebsgewinde (7) die mit der gabelförmigen Betätigungsstange (8) verdrehsicher verbundene Spindelmutter (9) axial antreibt;
**dadurch gekennzeichnet, dass** die Rotorwelle (6) eine biege- und drehstarre Kunststoffgewindespindel mit einem Kunststoffkern mit koaxial angeordneten metallischen Wellenenden aufweist, um als metallische Lagerzapfen an einander gegenüberliegenden Enden zur gleichzeitigen Gleitlagerung und axialen Lagerung zu wirken.

2. Linearschrittmotor, umfassend einen Rotor, zwei Gleitlager (13, 15; 14, 16), zwei Motorlagerschilde (2, 3), eine Spindelmutter (9) und eine gabelförmige Betätigungsstange (8);
wobei der Rotor eine Rotorwelle (6) umfasst, die ein Antriebsgewinde (7) umfasst und zum Antrieb eines linear geführten Aktuators ausgebildet ist, wobei die Rotorwelle (6) an ihren Enden Gleitlagerzapfen (11, 12) umfasst, die jeweils ein Ende, das radial und axial in den in den Motorlagerschilden (2, 3) angeordneten Gleitlagern (13, 15; 14, 16) eingeschlossen ist und das durch das Antriebsgewinde (7) die mit der gabelförmigen Betätigungsstange (8) verdrehsicher verbundene Spindelmutter (9) axial antreibt;
wobei die Rotorwelle (6) eine biege- und drehstarre Kunststoffgewindespindel mit koaxial angeordneten metallischen Wellenenden aufweist, um als metallische Lagerzapfen an einander gegenüberliegenden Enden zur gleichzeitigen Gleitlagerung und axialen Lagerung zu wirken;
**dadurch gekennzeichnet, dass** eine durchgehende metallische Zapfenachse (18) durch die Kunststoffgewindespindel geführt ist und einander gegenüberliegende Endabschnitte der Zapfenachse (18) die beiden Gleitlagerzapfen (11, 12) ausbilden.

3. Linearschrittmotor nach Anspruch 1, **dadurch gekennzeichnet, dass** zwei koaxial an gegenüberliegenden Enden der Rotorwelle (6) angeordnete Metalllagerzapfen die beiden Gleitlagerzapfen (11, 12) bilden und an der biege- und drehsteifen Kunststoffgewindespindel befestigt sind.

4. Linearschrittmotor nach Anspruch 2, **dadurch gekennzeichnet, dass** die Gleitlagerzapfen (11, 12) oder die Zapfenachse (18) verdrehsicher mit der Rotorwelle (6) verbunden sind.

5. Linearschrittmotor nach Anspruch 2, **dadurch gekennzeichnet, dass** die Gleitlagerzapfen (11, 12) oder die Zapfenachse (18) in Bezug auf die Rotorwelle (6) drehbar sind.

6. Linearschrittmotor nach einem der vorhergehenden Ansprüche, **dadurch gekennzeichnet, dass** an einer nicht antriebsseitigen Seite der Rotorwelle (6) ein Halsflansch (17) zur drehfesten Verbindung mit einem Rotormagneten (5) des Rotors angeformt ist.

7. Linearschrittmotor nach Anspruch 6, **dadurch gekennzeichnet, dass** der Rotormagnet (5) durch Spritzgießen der Rotorwelle (6) umspritzt wird.

8. Linearschrittmotor nach einem der vorhergehenden Ansprüche, **dadurch gekennzeichnet, dass** das Antriebsgewinde (7) ein Trapezfaden ist.

## Revendications

1. Moteur pas-à-pas linéaire comprenant un rotor, deux paliers lisses (13, 15 ; 14, 16), deux protections de palier de moteur (2, 3), un écrou de tige (9) et une barre d'actionnement en forme de fourche (8) ;
dans lequel le rotor comprend un arbre de rotor (6) qui comprend un filetage moteur (7) et est configuré pour entraîner un actionneur à guidage linéaire, l'arbre de rotor (6) comprenant des tourillons à palier lisse (11, 12) à ses extrémités, comprenant chacun une extrémité enfermée radialement et axialement dans les paliers lisses (13, 15 ; 14, 16) insérés dans les protections de palier du moteur (2, 3) et qui, par l'intermédiaire du filetage moteur (7), entraîne axialement l'écrou de tige (9) relié à la barre d'actionnement en forme de fourche (8) de manière à éviter toute rotation ;
**caractérisé en ce que** l'arbre de rotor (6) comprend une tige filetée en plastique rigide en flexion et en torsion, avec un noyau en plastique ayant des extrémités d'arbre métalliques disposées de manière coaxiale, de manière à servir de tourillons métalliques sur les extrémités opposées pour un support de palier lisse et un support axial simultanés.

2. Moteur pas-à-pas linéaire comprenant un rotor, deux paliers lisses (13, 15 ; 14, 16), deux protections de palier de moteur (2, 3), un écrou de tige (9) et une barre d'actionnement en forme de fourche (8) ;
dans lequel le rotor comprend un arbre de rotor (6) qui comprend un filetage moteur (7) et est configuré pour entraîner un actionneur à guidage linéaire, l'arbre de rotor (6) comprenant des tourillons à palier lisse (11, 12) à ses extrémités, comprenant chacun une extrémité enfermée radialement et axialement dans les paliers lisses (13, 15 ; 14, 16) insérés dans les protections de palier du moteur (2, 3) et qui, par l'intermédiaire du filetage moteur (7), entraîne axialement l'écrou de tige (9) relié à la barre d'actionnement en forme de fourche (8) de manière à éviter toute rotation ;
dans lequel l'arbre de rotor (6) comprend une tige filetée en plastique rigide en flexion et en torsion, avec des extrémités d'arbre métalliques disposées de manière coaxiale, de manière à servir de tourillons métalliques sur les extrémités opposées pour un support de palier lisse et un support axial simultanés ;
**caractérisé en ce qu'**un essieu (18) de tourillon métallique continu est guidé à travers la tige filetée en plastique, et **en ce que** des parties d'extrémité opposées de l'essieu de tourillon (18) forment les deux tourillons à palier lisse (11, 12).

3. Moteur pas-à-pas linéaire selon la revendication 1, **caractérisé en ce que** deux tourillons métalliques disposés de manière coaxiale aux extrémités opposées de l'arbre de rotor (6) forment les deux tourillons à palier lisse (11, 12) et sont fixés à la tige filetée en plastique rigide en flexion et en torsion.

4. Moteur pas-à-pas linéaire selon la revendication 2, **caractérisé en ce que** les tourillons à palier lisse (11, 12) ou l'essieu de tourillon (18) sont reliés à l'arbre de rotor (6) de manière bloquée en rotation.

5. Moteur pas-à-pas linéaire selon la revendication 2, **caractérisé en ce que** les tourillons à palier lisse (11, 12) ou l'essieu de tourillon (18) peuvent tourner par rapport à l'arbre de rotor (6).

6. Moteur pas-à-pas linéaire selon l'une des revendications précédentes, **caractérisé en ce qu'**une bride à collerette (17) est moulée sur un côté non entraîné de l'arbre de rotor (6) pour une connexion bloquée en rotation avec un aimant de rotor (5) du rotor.

7. Moteur pas-à-pas linéaire selon la revendication 6, **caractérisé en ce que**, une fois que l'arbre de rotor (6) est formé par moulage par injection, l'aimant de rotor (5) est formé par moulage par insertion.

8. Moteur pas-à-pas linéaire selon l'une des revendications précédentes, **caractérisé en ce que** le filetage moteur (7) est un filetage trapézoïdal.
